# EUROPEAN PATENT APPLICATION

(11) **EP 4 552 465 A1**
(43) Date of publication of application: **14.05.2025**
(21) Application number: 23209270.0
(22) Date of filing: 10.11.2023
(51) Int. Cl.: A01D 41/12

(54) **HARVESTER WITH EASY ACCESS TO GRAIN TANK**

(71) Applicant: CNH Industrial Belgium N.V., 8210 Zedelgem (BE); CNH Industrial America LLC, New Holland, PA 17557 (US)
(72) Inventor: VANCOILLIE, Ruben, 8210 Zedelgem (BE); LINDE, Karl, New Holland, 17557 (US); BEIRNAERT, Pieter-Jan, 8210 Zedelgem (BE); FLICKINGER, Wayne, New Holland, 17557 (US); YODER, Denver, New Holland, 17557 (US); DUQUESNE, Frank, 8210 Zedelgem (BE)
(74) Representative: CNH Industrial IP Department

(57) **Abstract**

The combine harvester (1') comprises a grain tank (7') having a cover (14') comprising pivotable panels (19,20a,20b') connected by collapsible connections (21) so that the cover forms a funnel-shaped extension of the main receptacle (15) of the tank when the cover is fully deployed. In a harvester (1') of the invention, at least one of the panels (20b') comprises an aperture (28) and a door (25) configured to close or open said aperture by pivoting about a pivot axis (22). When the cover is deployed, the door either closes the aperture and is secured thereto so that the panel (20b') has the same function as in a prior art harvester. However when the door (25) is opened, and supported by a support structure (26) of the harvester, the door obtains the function of a walking plank that enables a person to walk on said plank and thereby access the interior of the tank (7').

## Description

### Field of the Invention

The present invention is related to combine harvesters, in particular to the grain tank of the harvester and to means for accessing said grain tank.

### State of the art.

In a combine harvester, crops like corn or wheat are cut and subsequently processed in order to separate grains from plant residue material. A combine harvester typically comprises a threshing section and a cleaning section, the latter including sieves for separating clean grains from smaller plant residue. The clean grains are collected in a trough at the bottom of the cleaning section, and thereafter transported to a grain tank higher up in the combine's structure.

In order to maximize the holding capacity of the grain tank, most modern combine harvester include a tank cover comprising panels which can be pivoted from a closed to an open position. Adjacent panels are connected by triangular canvas sections so that in the open position, the panels and the canvas sections together form a funnel-shaped extension of the tank.

The pivotable panels are quite large, and when the cover is open, it is difficult for a person to gain access to the interior of the tank. Such access is needed for example during interventions for maintenance or repair of the interior machinery at the bottom of the tank, which include grain augers, actuators for moving the panels, and other equipment.

### Summary of the invention

The invention is related to a combine harvester as described in the appended claims. The harvester includes a grain tank having a cover comprising pivotable panels connected by collapsible connections so that the cover forms a funnel-shaped extension of the main receptacle of the tank when the cover is fully deployed. In a harvester of the invention, at least one of the panels comprises an aperture and a door configured to close or open said aperture by pivoting about an essentially horizontal pivot axis, with 'essentially horizontal' referring to the orientation of the pivot axis when the harvester is on a horizontal ground surface. When the cover is deployed, the door either closes the aperture and is secured thereto so that the panel has the same function as in a prior art harvester. However when the door is opened, and supported by a support structure of the harvester, the door obtains the function of a walking plank that enables a person to walk on said plank and thereby access the interior of the tank.

The invention thereby enables easy access to the tank when the harvester is not operational, for example during maintenance or repairs, while maintaining the full functionality of the tank cover during operation of the harvester.

### Brief description of the figures

Figure 1 is a conceptual side view of a combine harvester, indicating the approximate positions of the grain tank and the engine.
Figure 2 is a three-dimensional wireframe model of the grain tank of a combine harvester, with the cover of the tank in the open condition.
Figure 3 is a conceptual side-view of a combine harvester according to an embodiment of the invention.
Figure 4 illustrates a more detailed embodiment of the grain tank in a harvester according to an embodiment of the invention, with the grain tank door in a closed and secured condition.
Figure 5 illustrates the embodiment of Figure 4, now with the grain tank door in an open condition.

### Detailed description of preferred embodiments of the invention

Preferred embodiments will now be described with reference to the drawings. The detailed description is not limiting the scope of the invention, which is defined only by the appended claims.

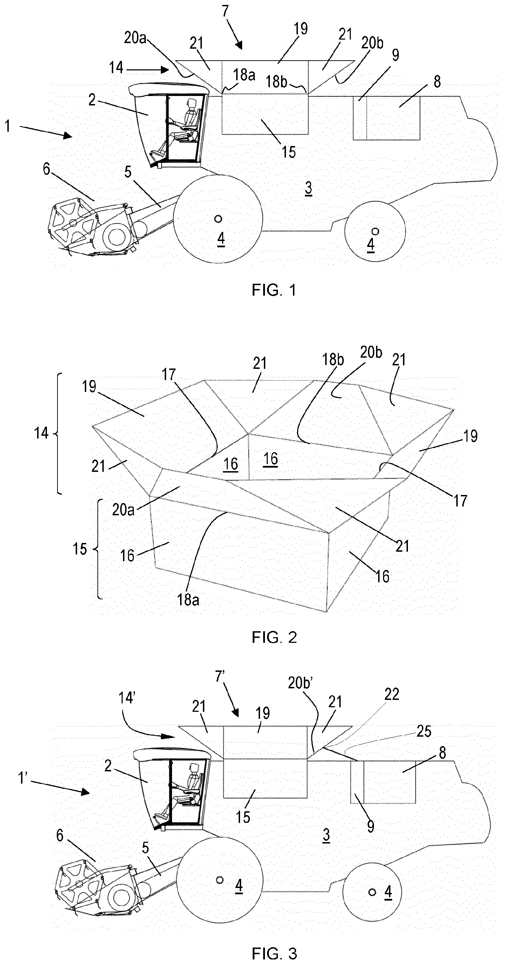

Figure 1 is a conceptual side view of a self-propelled combine harvester 1 as known in the prior art. The harvester comprises an operator's cabin 2 and a main body 3 supported by fore and aft wheels 4. At the front, the harvester comprises a feeder 5 with a header 6 removably attached thereto. The header 6 is configured to cut crops from a field and supply the crops to the feeder 5, which moves the crops into the interior machinery of the harvester. This machinery includes threshing elements for separating large plant material from smaller tailings, and sieves for separating individual grains from plant residue, as well as grain augers and a grain elevator for transporting grains into the grain tank 7 mounted at the top of the harvester body. Details of the interior machinery are not shown as it is well known by the skilled person.

Two further components are illustrated : the main engine 8 of the harvester, and a cooling fan compartment 9 mounted adjacent the engine 8 and comprising one or more cooling fans for cooling the engine 8. The grain tank 7, the engine 8 and the cooling fan compartment 9 are mounted on the harvester's chassis (not shown), with the engine 8 and the cooling fan compartment 9 located behind the grain tank 7 as seen in the direction extending between the front side and the back side of the harvester. The top side of the cooling fan compartment 9 and the engine 8 are represented in Figure 1 as coplanar with the top side of the harvester as a whole. In reality, a roof portion of the harvester (not shown) will usually cover these components fully or partially to protect them from weather conditions.

The grain tank 7 of a harvester according to the prior art is shown in a 3D view in Figure 2. The image shows a wireframe model of the tank 7 without any details and intended only to illustrate the main components and their relative positions and interaction. The tank 7 comprises a receptacle 15, at the bottom of which are one or more grain augers for feeding grain to a discharge elevator (not shown) through which grains can be evacuated to a trailer that is towed alongside the harvester during a harvesting run.

The receptacle 15 is represented as a rectangular box with four upstanding sidewalls 16, but in reality it may have a more intricate shape. The upper edge of the receptacle 15 is rectangular in shape, and is formed of straight edge portions 17 and 18 essentially lying in a plane oriented more or less horizontally when the harvester 1 is placed on a horizontal surface. The edge portions include laterally arranged edge portions 17 and transverse edge portions 18a and 18b. The first transverse edge portion 18a is closer to the front side of the harvester and the second transverse edge portion 18b is closer to the back side of the harvester.

The tank 7 comprises a cover 14 represented in the open condition in the drawings shown in Figures 1 and 2. The cover 14 comprises panels 19 and 20 which are pivotably coupled to the respective straight edge portions 17 and 18 of the receptacle's upper edge. In the embodiment shown, the panels consist of two rectangular panels 19 coupled to the laterally arranged edge portions 17 and two trapezium-shaped panels 20a and 20b coupled respectively to the first and second transverse edge portions 18a and 18b . According to other embodiments, all the panels can be trapezium-shaped. The panels act as lids for closing and opening the receptacle 15. The base of each panel is about equal in length to the length of the straight edge portion to which it is coupled. This coupling is realized by suitable hinges or similar pivoting means Actuation of the pivoting movement of the panels may be done manually or by electric or hydraulic actuators (not shown).

Between each pair of adjacent panels 19 and 20a or 19 and 20b, i.e. adjacent to each other in a corner of the rectangular upper edge of the receptacle 15, the cover 14 comprises a collapsible connection 21. This may be a non-flexible triangular canvas 21 attached at its sides to the lateral edges of the two adjacent panels. The canvases may be reinforced by foldable strips (not shown) between the upper corners of the panels. The cover thus comprises 4 such collapsible connections, which enable the cover to take the shape of a funnel when the panels are fully deployed, as shown in the drawing in Figure 2. In this position, the canvases 21 obstruct further pivoting of the panels 19/20 in the direction away from the receptacle 15. The cover 14 thereby opens up the receptacle 15 to the exterior and also extends the receptacle in the upward direction, i.e. the capacity of the receptacle 15 is extended by the volume of the funnel. When the panels are pivoted back towards the receptacle 15, the canvases 21 collapse and thereby enable the panels to close off the receptacle 15, possibly with opposite panels partially overlapping in the closed position.

An embodiment of a harvester 1' according to the invention is illustrated in Figure 3. Apart from the distinguishing aspects described hereafter, the harvester 1' has the same structure as the harvester 1 shown in Figure 1, including the grain tank 7' and the cover 14' comprising 4 pivotable panels. However, the panel 20b' that is closer to the back side of the harvester 1' now comprises a door 25 that is pivotable about an essentially horizontal pivot axis 22. In the view shown in Figure 3, the door 25 is pivoted away from the panel 20b' and away from the receptacle 15, and an end portion of the door 25 rests on the housing of the cooling fan compartment 9. The door 25 thereby serves as a walking plank that enables easy access for a person to the grain tank 7'.

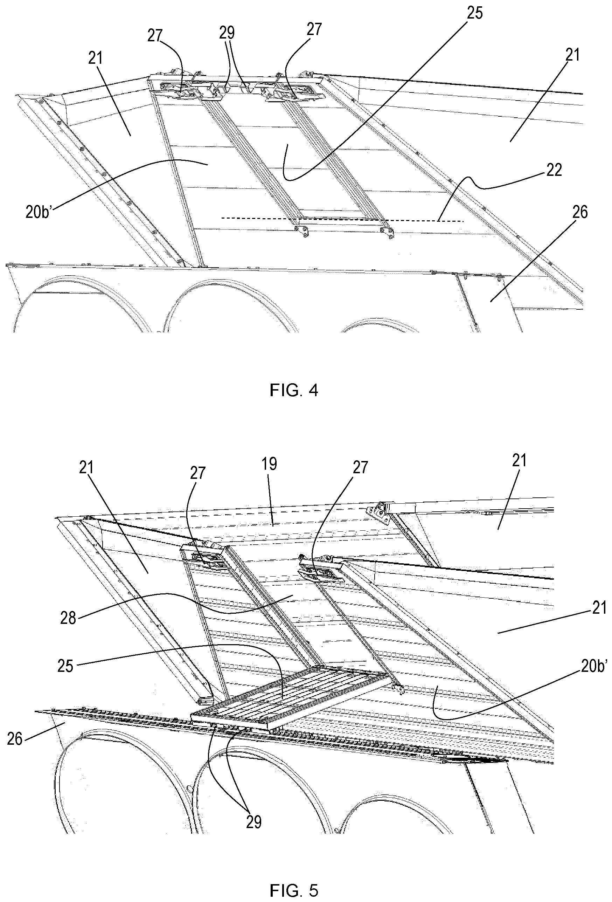

Figures 4 and 5 show images of a more detailed embodiment. The panels 19 and 20b' and the canvases 21 are indicated, as well as the housing 26 of the cooling fan compartment 9 (hereafter referred to as 'cooling fan housing' or 'housing'). The panels may be formed of aluminium for example. The engine and the roof of the harvester are not shown in this drawing. It is seen that the door 25 is rectangular in shape and that when the door 25 is closed as illustrated in Figure 4, the door 25 is coplanar with the panel 20b', and secured thereto by a pair of locks 27 placed close to the upper edge of the door 25 and of the panel 20b'. The door 25 may be formed of the same material as the panel 20b' into which it is incorporated, for example aluminium. The length of the door 25 may be in the order of 1 m, and the width in the order of 0.5m. When the door 25 is closed and secured, the panel 20b' together with the door 25 performs the same function as the panel 20b of the prior art embodiment.

In the embodiment shown, the locks 27 are overcenter locks enabling a quick manual release and re-closure of the locks. When the locks 27 are released, as shown in Figure 5, the door 25 pivots outward about hinge axis 22 until an end portion of the door rests on an upper surface of the housing 26, thereby opening up a rectangular aperture 28 in the panel 20b'. The door 25 now functions as a walking plank, allowing a person easy access through aperture 28 to the interior of the tank, by walking on the door/plank 25 and stepping into said interior, where preferably a ladder or a number of steps are provided.

A person who wishes to obtain access to the tank in this way when the harvester is not operational can climb onto the roof of the harvester and approach the panel 20b' when the cover 14' is fully deployed. Possibly a roof panel may need to be opened or removed to reveal the top side of the cooling fan housing 26. The person then releases the locks 27 manually, and allows the door 25 to pivot in the direction of the cooling fan housing 26, preferably placing it manually onto the top side of said housing 26. Shock absorbing elements 29 are preferably mounted on the underside of the door 25 and placed so that when the door 25 is fully deployed, the shock absorbing elements 29 rest on the upper surface of the cooling fan housing 26. The top edge of the panel 20b' on either side of the aperture 28 can serve as a hand support for the person while walking on the walking plank 25. According to other embodiments, a rail or similar hand support may be mounted on the panel 20b', on one or both sides of the aperture 28. The walking surface of the door/plank 25 may be provided with anti-slip strips or similar means to minimize the danger of a person slipping when stepping on the door/plank 25. The stiffness, dimensions and the material of the door/plank 25 must be chosen so that this element can carry a person when it is in the deployed state shown in Figure 5.

Instead of being pivotable manually, an actuator may be provided for closing and opening the door 25. This could be for example a hydraulic or electric variable length actuator mounted inside the tank and coupled to the door 25 via a suitable linkage. Opening and closing the door 25 can then be actuated from the operator's cabin 2 or by a locally provided actuator button or the like. The locks can be based on other mechanisms apart from the illustrated overcenter mechanism. The locks could also be electrically actuatable. In stead of two locks, a single lock could be provided.

According to preferred embodiments, one or more sensors (not shown) are included in the cover 14', for detecting whether the door 25 is open or closed. Suitable sensors can be based on known technologies, for example a proximity sensor mounted on the door 25 and configured to detect the proximity of the material of the panel 20b' along the sides of the aperture 28. The sensor is coupled to a control unit connected to the operator's cabin 2 where the position of the door (closed and secured or open) can be checked by the operator, for example on a screen or via a LED indicator.

The invention is not limited to embodiments wherein the door 25 is configured to be supported by the cooling fan housing 26. The supporting structure may be another structure of the harvester depending on the actual layout of the harvester itself. The door 25 could be incorporated in another of the panels of the cover, and be supported by another structure available adjacent the panel that comprises the door. According to other embodiments, more than one of the cover panels may be provided with a pivotable door as described above.

The upper edge of the receptacle 15 may be rectangular as shown, but may alternatively have another polygon-shape having straight edge portions with a panel pivotably coupled to each edge portion, and with canvases or other collapsible connections connected between adjacent panels.

The door 25 is preferably rectangular in shape, but could also have a slightly different shape, for example having curved side edges to broaden a middle section of the door, thereby enlarging its surface when the door performs the walking plank function.

In stead of a door 25 that is supported (when opened) by a structure of the harvester, such as the cooling fan housing 26, the door could also be supported by the cover itself, in particular by the panel 20b' into which the door is incorporated, for example by being connected thereto by a pair of chains or similar pliable links. The length of these connections is then such that when the door is deployed, it becomes similar to a hanging bridge, enabling access to the tank in the same way as described above.

## Claims

1. A combine harvester (1') having a front side and a back side and comprising a grain tank (7'), said grain tank comprising :
- a receptacle (15) having sidewalls (16) and an upper edge formed of straight edge portions (17, 18a, 18b),
- a cover (14') comprising panels (19,20a,20b') which are pivotably coupled respectively to said edge portions (17,18a,18b), the cover further comprising collapsible connections (21) between each pair of adjacent panels so that :
∘ the panels act as lids configured to close or open the receptacle (15),
∘ when the panels are fully deployed to thereby open the receptacle, the cover (14) forms a funnel-shaped extension of the receptacle,
**characterized in that** one of the panels (20b') comprises an aperture (28) and a pivotable door (25) configured so that when the cover forms said funnel-shaped extension, the door is pivotable about an essentially horizontal axis (22) between a first position wherein the door is coplanar with the panel (20b) and secured thereto, thereby closing off said aperture (28), and a second position, wherein in said second position :
- the aperture (28) is open,
- the door (25) is supported by a support structure of the harvester, and
- the door obtains the function of a walking plank that provides access to the receptacle (15) of the grain tank (7') through the open aperture (28).

2. The harvester according to claim 1 wherein the upper edge of the receptacle (15) is rectangular in shape, comprising two lateral edge portions (17) and two transverse edge portions (18a, 18b), the first transverse edge portion (18a) being closer to the front side of the harvester and the second transverse edge portion (18b) being closer to the back side of the harvester, and wherein the panel (20b') that is pivotably coupled to the second transverse edge portion (18b) comprises said aperture (28) and said pivotable door (25).

3. The harvester according to claim 1 or 2, comprising an operator's cabin (2) at the front side of the harvester, and wherein the grain tank (7') is located behind the operator's cabin.

4. The harvester according to any one of the preceding claims, wherein the panel (20b') comprising the aperture (28) and the door (25) is further provided with one or more hand supports on one or both sides of the aperture (28).

5. The harvester according to any one of the preceding claims, further comprising one or more sensors configured to detect whether or not the door (25) is closed and secured, and further comprising a control unit coupled to said one or more sensors and configured to communicate the condition of the door (25) , either closed and secured or not closed and secured, to an operator of the harvester.

6. The harvester according to any one of the preceding claims, wherein the door (25) is a rectangular door that is longer in the direction extending between the hinge axis (22) and an upper edge of the panel (20b') than in the direction perpendicular thereto.

7. The harvester according to any one of the preceding claims, wherein when the door is in the first position, said door is secured to the panel (20b') comprising the aperture (28) by one or more locks (27).

8. The harvester according to claim 7, wherein said one or more locks include one or more manually releasable overcenter locks (27).

9. The harvester according to any one of the preceding claims, wherein the support structure is a structure (26) positioned adjacent the grain tank (7') and having an upper support surface and wherein an end portion of the door (25) rests on said support surface when the door is in said second position.

10. The harvester according to claim 9, wherein the door (25) comprises shock absorbing elements (29) on its underside, configured to be in contact with said support surface when the door is in the second position.

11. The harvester according to claim 9 or 10, wherein the support structure is **a** housing (26) of a cooling fan compartment (9) of the harvester.

12. The harvester according to any one of claims 1 to 8, wherein the support structure is the panel (20b') itself that comprises the aperture (28) and the pivotable door (25), and wherein when the door is in the second position, said door is suspended from said panel by a pair of pliable links, for example chains.
